Europäisches Patentamt

(19) European Patent Office

Office européen des brevets

(11) Numéro de publication : **0 059 130**
**B1**

# (12) FASCICULE DE BREVET EUROPÉEN

(45) Date de publication du fascicule du brevet :
**09.01.85**

(51) Int. Cl.⁴ : **G 21 C   5/08**

(21) Numéro de dépôt : **82400199.4**

(22) Date de dépôt : **04.02.82**

(54) Réacteur nucléaire à eau pressurisée.

(30) Priorité : **10.02.81 FR 8102581**

(43) Date de publication de la demande :
**01.09.82 Bulletin 82/35**

(45) Mention de la délivrance du brevet :
**09.01.85 Bulletin 85/02**

(84) Etats contractants désignés :
**BE DE GB IT**

(56) Documents cités :
**FR-A- 1 565 707**
**GB-A-   977 020**
**GB-A- 1 018 299**
**GB-A- 1 115 492**
**US-A- 3 011 962**
**US-A- 3 260 650**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Vrillon, Bernard**
**15, rue des Ecoles**
**F-91320 Wissous (FR)**

(74) Mandataire : **Mongrédien, André et al**
**c/o BREVATOME 25, rue de Ponthieu**
**F-75008 Paris (FR)**

EP 0 059 130 B1

Jouve, 18, rue St-Denis, 75001 Paris, France

## Description

La présente invention se rapporte à un réacteur nucléaire à eau pressurisée, et concerne plus particulièrement les structures internes d'un tel réacteur qui permettent de maintenir les assemblages de section carrée formant le cœur du réacteur.

De façon plus précise, la présente invention se rapporte à un réacteur nucléaire à eau pressurisée du type comprenant une cuve cylindrique à axe vertical obturée par un couvercle, une enveloppe cylindrique disposée coaxialement à l'intérieur de la cuve et contenant des assemblages de section carrée constituant le cœur du réacteur, un collecteur d'entrée de l'eau de refroidissement formé autour de ladite enveloppe et en dessous du cœur, un collecteur de sortie de l'eau de refroidissement formé au-dessus du cœur, et des moyens pour maintenir radialement les assemblages, ces moyens étant situés dans l'espace défini entre l'enveloppe cylindrique et les assemblages.

En raison de la section carrée des assemblages combustibles constituant le cœur du réacteur, il existe un espace entre les assemblages périphériques et l'enveloppe cylindrique du cœur et cet espace doit être occupé afin d'assurer le maintien radial des assemblages.

Dans les réacteurs construits à ce jour, le remplissage de cet espace est réalisé au moyen de plaques ou cloisons verticales formant des déflecteurs qui délimitent le contour du logement des assemblages combustibles. Ces cloisons sont maintenues radialement par des étagères horizontales qui les relient à l'enveloppe cylindrique. Ces étagères sont fixées aux cloisons verticales et à l'enveloppe cylindrique par des vis.

Toutefois, cette disposition présente plusieurs inconvénients. Ainsi, sous l'effet du rayonnement, il apparaît des dégagements de chaleur dans ces structures. Il en résulte des dilatations différentielles entre les cloisons et l'enveloppe du cœur, qui ont pour effet de solliciter très fortement les vis de liaison à la flexion. De plus, dans l'hypothèse d'une dépressurisation du circuit primaire du réacteur, l'eau qui se trouve emprisonnée entre les cloisons verticales et l'enveloppe cylindrique du cœur exerce au cours de sa détente des efforts très importants sur ces cloisons. Ces efforts doivent nécessairement être repris par les vis de liaison afin que le cœur ne soit pas écrasé. En outre, les vis de liaison s'échauffent sous l'effet du rayonnement du cœur. Pour éviter que cet échauffement ne devienne excessif, on est amené à prévoir des trous de refroidissement individuels à chaque vis, ce qui est particulièrement onéreux. De plus, la circulation de l'eau dans l'espace séparant les cloisons verticales de l'enveloppe cylindrique est complexe, de sorte que le calcul des températures réelles des structures en régime permanent et au cours des régimes transitoires est relativement difficile. Enfin, les tolérances géométriques très précises exigent pour chaque pièce participant à l'assemblage de la structure, un usinage général très précis et donc très coûteux.

La présente invention a pour objet un réacteur nucléaire à eau pressurisée dans lequel les moyens permettant de maintenir radialement les assemblages et situés entre l'enveloppe cylindrique du cœur et ces assemblages ne présentent pas les inconvénients des structures vissées de la technique antérieure qui viennent d'être mentionnées.

A cet effet, il est proposé conformément à l'invention un réacteur nucléaire à eau pressurisée du type défini précédemment, ce réacteur étant caractérisé en ce que les moyens pour maintenir radialement les assemblages sont constitués par des blocs métalliques remplissant la totalité dudit espace, ces blocs étant munis de trous verticaux alignés sur toute la hauteur du cœur pour définir des canaux de refroidissement continus dans lesquels une faible portion de l'eau de refroidissement circule entre le collecteur d'entrée et le collecteur de sortie.

En remplissant ainsi en totalité l'espace défini entre l'enveloppe du cœur et les assemblages, on voit qu'il est possible de supprimer toutes liaisons par vis entre ces blocs et l'enveloppe cylindrique du cœur. De plus, la division des structures en blocs dont la température peut être rendue quasi homogène sous rayonnement permet de supprimer les problèmes liés aux dilatations différentielles à l'intérieur de ces structures. En cas de dépressurisation du circuit primaire, les efforts exercés par l'eau au cours de sa détente sont très faibles car il y a très peu d'eau emprisonnée entre les blocs métalliques et l'enveloppe du cœur. Ces efforts sont donc facilement supportés par la structure. En outre, le calcul des températures réelles des structures en régime permanent et au cours des régimes transitoires est très simplifié par rapport à la technique antérieure, puisque la circulation de l'eau dans les trous formés dans les blocs métalliques peut être connue sans difficulté avec une grande précision. L'absence de liaison métallique entre les blocs métalliques et l'enveloppe cylindrique du cœur permet aussi de diminuer singulièrement les tolérances de fabrication de ces blocs et donc le coût de l'ensemble de la structure. Enfin, les blocs assurent une protection améliorée de la cuve, notamment à l'irradiation, qui accroît la sûreté du réacteur.

Les blocs métalliques utilisés selon la présente invention, dont les dimensions sont de préférence relativement réduites, peuvent être empilés les uns sur les autres dans le sens vertical pour former des colonnes dont les blocs sont assemblés par des tirants placés dans certains des canaux de refroidissement. De même, les blocs prennent de préférence appui les uns sur les autres dans le sens circonférentiel par des surfaces sensiblement radiales, de façon à former une voûte auto-portante vis-à-vis des efforts centripètes et ils sont solidarisés entre eux vis-à-vis des efforts centrifuges ou centripètes par des clavettes verticales ou par des encoches complémentaires.

Le nombre et la section des canaux peuvent être déterminés afin que la température de chaque bloc soit sensiblement homogène.

Le débit d'eau circulant dans les canaux continus ainsi formés peut notamment être ajusté en fonction de la position de la colonne par rapport au cœur du réacteur en disposant des moyens de contrôle du débit tels que des diaphragmes soit au niveau de la base du cœur du réacteur, soit au niveau de la partie supérieure du cœur, de façon que la température de chaque bloc soit sensiblement homogène.

On décrira maintenant, à titre d'exemple non limitatif, un mode de réalisation préféré de l'invention en se référant aux dessins annexés dans lesquels :

la figure 1 est une vue en coupe verticale schématique d'un réacteur nucléaire à eau pressurisée sur laquelle on a représenté, sur la partie droite de la figure, les moyens de maintien radial utilisés selon la technique antérieure et, sur la partie gauche de la figure, les moyens de maintien radial préconisés selon la présente invention, et

la figure 2 est une vue en perspective et à plus grande échelle montrant comment peuvent être assemblés les blocs métalliques assurant le maintien radial des assemblages combustibles conformément à la présente invention.

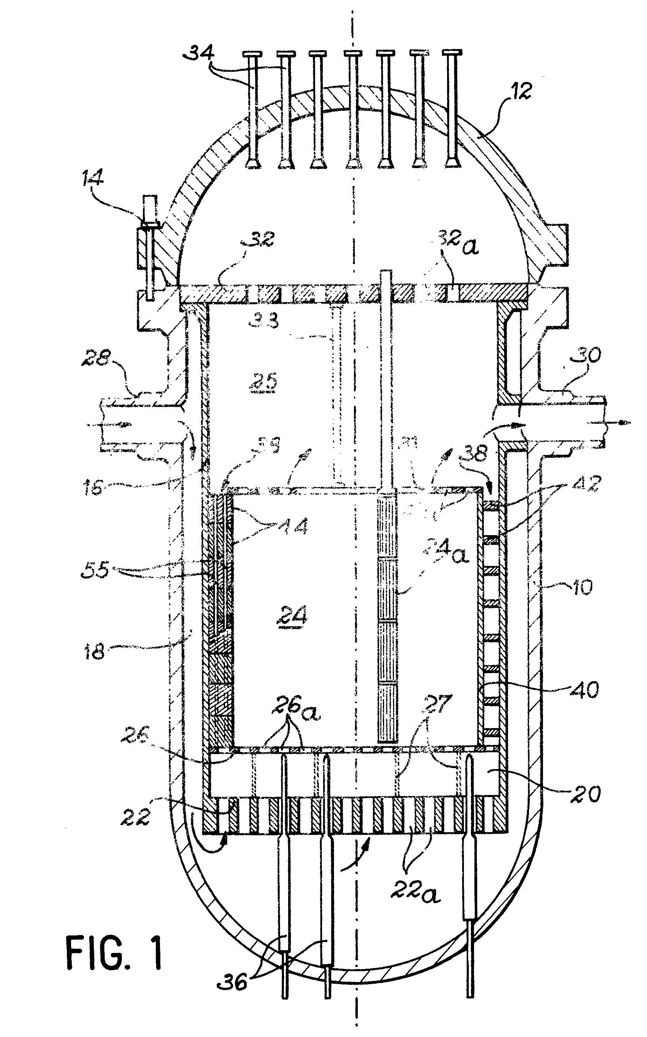

Le réacteur nucléaire à eau pressurisée représenté sur la figure 1 comprend de façon connue une cuve cylindrique 10 à axe vertical obturée à sa partie supérieure par un couvercle de cuve 12 en forme de dôme fixé à la cuve par exemple par des goujons 14. La cuve 10 définit à son extrémité supérieure un rebord annulaire auquel est suspendue une enveloppe cylindrique 16 disposée coaxialement à l'intérieur de la cuve de façon à définir à l'intérieur de celle-ci une chambre annulaire 18 jouant le rôle de collecteur d'entrée pour l'eau du circuit primaire. Cette eau pénètre dans le collecteur annulaire 18 par un ou plusieurs ajutages d'entrée 28 formés dans la cuve 10 à proximité de son extrémité supérieure. L'enveloppe cylindrique 16 porte à son extrémité inférieure une plaque horizontale de répartition de débit 22 percée d'orifices 22a permettant à l'eau du circuit primaire admis dans le collecteur d'entrée 18 de pénétrer avec un débit approprié dans un sommier d'alimentation 20 défini entre la plaque 22 et une plaque horizontale 26 assurant le supportage du cœur 24 du réacteur. La plaque 26 est reliée à la plaque 22 par des tirants 27 et elle est également percée d'orifices 26a permettant à l'eau du circuit primaire de pénétrer dans chacun des assemblages combustibles constituant le cœur 24 du réacteur, et dont l'un seulement est représenté en 24a sur la figure 1. L'eau échauffée par la réaction de fission du combustible nucléaire dans les assemblages 24a sort à l'extrémité supérieure de ceux-ci et pénètre dans un collecteur de sortie 25 défini à l'intérieur de l'enveloppe 16. L'eau chaude parvenue dans le collecteur de sortie 25 est évacuée hors de la cuve 10 par un ou plusieurs ajutages de sortie 30 formés à la fois dans l'enveloppe 16 et dans la cuve 10. Ces ajutages 30 traversent de façon étanche le collecteur d'entrée 18 et font communiquer directement le collecteur de sortie 25 avec le reste du circuit primaire. Comme l'illustre la figure 1, les ajutages d'entrée 28 et de sortie 30 sont situés pratiquement au même niveau dans la partie supérieure de la cuve 10, au-dessus du cœur 24.

De plus, les éléments combustibles 24a sont maintenus dans le sens vertical par une plaque supérieure de cœur 31 percée comme la plaque inférieure 26 d'orifices 31a permettant à l'eau du circuit primaire de sortir des assemblages à la partie supérieure du cœur.

Toujours de façon connue, on voit sur la figure 1 que le rebord annulaire formé à l'extrémité supérieure de la cuve 10 supporte également une plaque de maintien supérieure 32 délimitant l'extrémité supérieure du collecteur de sortie 25. Cette plaque 32 est percée d'orifices 32a destinés au passage des instruments de commande et de mesure nécessaires au pilotage du réacteur. Pour la même raison, le couvercle 12 du réacteur est traversé par des manchettes 34. Le contrôle du fonctionnement du réacteur s'effectue également à la partie inférieure de la cuve 10 au moyen de tubes guides d'instrumentation 36 traversant le fond de la cuve et certains des orifices 22a formés dans la plaque de répartition de débit 22.

La plaque supérieure de cœur 31 est reliée à la plaque 32 par des colonnes 33, pour définir avec des guides de grappes de contrôle (non représentés) les structures internes supérieures du réacteur.

La présente invention se rapporte en particulier à un réacteur nucléaire à eau pressurisée dans lequel la section des assemblages combustibles 24a constituant le cœur 24 du réacteur est carrée. De tels assemblages, qui sont constitués d'un grand nombre de crayons combustibles, sont bien connus des spécialistes de la technique, de sorte qu'ils ne seront pas décrits ici en détail. Le cœur du réacteur comprend en outre des grappes de contrôle dont le déplacement vertical au travers des manchettes 34 enfermant les mécanismes de manœuvre permet d'assurer le pilotage du réacteur et son arrêt d'urgence en cas d'incident.

En raison de la configuration cylindrique de l'enveloppe 16 du cœur et de la section carrée des assemblages 24a constituant ce dernier, il existe entre le cœur 24 et l'enveloppe 16 un espace 38, de largeur variable, qui doit nécessairement être comblé afin d'assurer le maintien radial des assemblages et afin d'obliger l'eau de refroidissement à circuler dans les éléments combustibles et non à la périphérie du cœur.

Sur la partie droite de la figure 1, on a représenté la technique antérieure selon laquelle des plaques ou cloisons verticales formant déflecteurs 40 délimitent le contour du logement des assemblages combustibles 24a. Dans cette solution connue, l'entretoisement entre les déflecteurs 40 et l'enveloppe 16 du cœur est réalisé au moyen d'étagères horizontales 42 qui sont réparties sur toute la hauteur de l'espace 38 et fixées à la fois à l'enveloppe 16 et aux déflecteurs 40 par des vis (non représentées).

Comme on l'a déjà mentionné précédemment, cette solution présente· un certain nombre d'inconvénients parmi lesquels il faut mentionner les contraintes de flexion supportées par les vis de fixations des étagères 42 en raison des dilatations différentielles entre les déflecteurs 40 et l'enveloppe 16 ainsi que les contraintes de tension également supportées par les vis en cas de dépressurisation accidentelle du circuit primaire. De plus, on a vu que l'échauffement supporté par les vis réclame pour la plupart d'entre elles l'usinage d'un trou de refroidissement individuel. La circulation de l'eau dans l'espace 38 étant particulièrement complexe, le calcul des températures réelles des structures en régime permanent et au cours des régimes transitoires est très difficile. Enfin, les déflecteurs 40 et les étagères 42 doivent être usinés avec une très grande précision en raison des tolérances géométriques très précises exigées par cet assemblage.

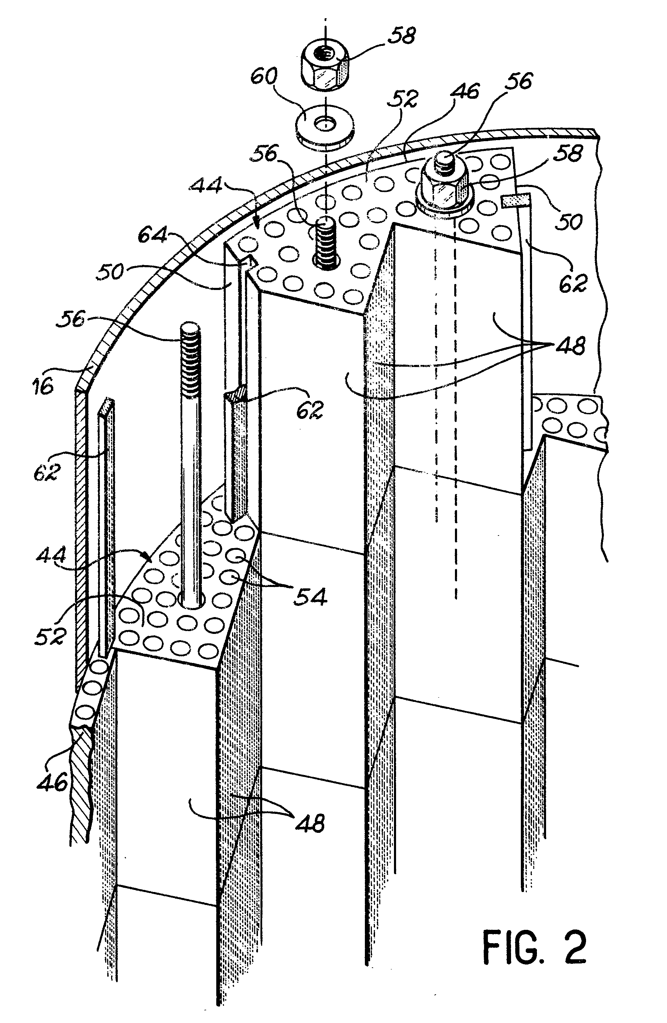

Conformément à la présente invention, les moyens de remplissage de l'espace 38 représentés sur la partie droite de la figure 1 sont remplacés par des moyens de remplissage d'un type totalement différent représenté sur la partie gauche de cette figure et, en perspective et à plus grande échelle sur la figure 2. Ainsi, conformément à l'invention, l'espace 38 est rempli en totalité par des blocs métalliques 44, de dimensions relativement réduites, qui reposent directement sur la plaque inférieure 26 assurant le supportage des éléments combustibles 24a. Ces blocs métalliques 44 sont empilés les uns sur les autres pour former des colonnes dans le sens vertical. Les blocs 44 ont tous la même hauteur et ils définissent ainsi des couches superposées dans lesquelles les blocs prennent appui les uns contre les autres dans le sens circonférentiel.

Comme le montre en particulier la figure 2, chacun des blocs 44 présente une face verticale incurvée 46 qui épouse la forme de la surface interne de l'enveloppe cylindrique 16 et des faces verticales planes 48 orthogonales entre elles et au nombre de quelques unités pour chaque bloc, sur lesquelles viennent prendre appui les éléments combustibles 24a. Les blocs 44 prennent appui les uns sur les autres dans le sens circonférentiel par des faces planes 50 dirigées sensiblement de manière radiale par rapport à l'enveloppe 16. Les faces 50 sont disposées de telle sorte que les blocs 44 forment une voûte autoportante vis-à-vis des efforts centripètes qui pourraient leur être appliqués, notamment en cas de dépressurisation du circuit primaire. Les faces terminales 52 des blocs 44 sont également planes et sensiblement horizontales.

Les blocs 44 sont munis de trous 54, de préférence cylindriques, et dont les axes sont verticaux. Ces trous 54, destinés au refroidissement des blocs, sont disposés de façon identique pour tous les blocs 44 d'une même colonne, de manière à former des canaux de refroidissement continus 55 (voir figure 1) qui débouchent à la fois dans le collecteur de sortie 25 et dans le sommier 20 au travers de certains des orifices 26a percés dans la plaque inférieure 26. L'eau sous pression du circuit primaire circule ainsi dans les trous 54 et assure le refroidissement des blocs 44.

Comme le montre la figure 2, les blocs d'une même colonne sont solidarisés par des tirants 56 filetés à leurs extrémités et placés dans certains des trous de refroidissement 54, ces tirants ayant pour longueur la hauteur du cœur 24. Des écrous 58 sont vissés sur les extrémités des tirants 56 afin de serrer les blocs d'une même colonne les uns sur les autres. De préférence, une rondelle 60 est interposée entre chaque écrou 58 et le bloc 44 adjacent. Des rainures radiales ou des trous radiaux situés dans l'épaisseur de la rondelle 60 permettent la circulation de l'eau entre le trou dans lequel se trouve le tirant et l'extérieur de ce trou.

Les blocs 44 sont également solidarisés entre eux vis-à-vis des efforts centrifuges ou centripètes par des clavettes planes 62 reçues dans des rainures 64 formées sur les faces d'appui 50 des blocs. Ces clavettes 62 sont disposées verticalement et leur plan médian est tangent à un cercle centré sur l'axe de la cuve 10 et passant par l'axe de la clavette correspondante. Bien entendu, les clavettes 62 et les rainures 64 peuvent être remplacées par tout moyen équivalent, et notamment par des encoches complémentaires formées sur les faces 50 des blocs en vis-à-vis. Les clavettes 62 ont une longueur supérieure à la hauteur des blocs 44 de façon à interdire les déplacements relatifs des blocs 44 d'une même colonne les uns par rapport aux autres.

Selon l'invention, il n'est pas nécessaire de prévoir une étanchéité entre les blocs d'une même colonne. L'eau de circuit primaire qui circule dans les trous de refroidissement 54 du bas vers le haut comme dans le cœur 24 du réacteur est ainsi en équilibre de pression avec l'eau qui circule dans le cœur à chaque niveau de plan de joint entre les blocs.

Le débit d'eau circulant dans une même colonne peut être ajusté en fonction de la position de cette colonne par rapport au cœur à l'aide de diaphragmes (non représentés) situés soit à la base des blocs de la couche la plus basse, soit à la partie supérieure des blocs de la couche la plus haute.

Les blocs 44 peuvent être avantageusement réalisés en acier inoxydable moulé. Toutes les faces 46, 48, 50 et 52 sont alors usinées tandis que les trous de refroidissement 54 peuvent être bruts de moulage. Du fait des symétries du cœur, le nombre de modèles de blocs ayant une géométrie différente est en fait limité à quelques unités.

Par rapport aux structures utilisées selon la technique antérieure, la structure qui vient d'être décrite en se référant à la figure 2 présente les avantages suivants.

Le dessin des blocs 44 est plus simple que celui des cloisons 40 et des étagères 42 de la technique antérieure. Les usinages à réaliser sont moins nombreux et la construction est donc moins coûteuse. De plus, le problème des dilatations différentielles est supprimé par la division des structures en blocs dont la température peut être rendue quasi homogène sans rayonnement en répartissant judicieusement les trous de refroidissement 54 et en ajustant le débit d'eau dans chaque trou. En outre, la structure ne comporte pas de vis d'assemblage. En cas de dépressurisation du cœur, cette structure ne peut pas écraser le cœur car il y a très peu d'eau emprisonnée entre les blocs et l'enveloppe 16. Le jeu entre cette enveloppe et les blocs 44 est en effet limité à celui qui est nécessaire au montage et au fonctionnement de la structure. De plus, la dépressurisation de cette eau n'engendre radialement que des efforts très faibles aisément supportés par cette structure. L'évacuation de l'eau contenue dans les trous circulaires 54 à la suite d'une dépressurisation s'effectuerait selon le sens de la moindre résistance, c'est-à-dire vers le bas et le haut du cœur, avec seulement quelques fuites entre les blocs 44. Ainsi, grâce à cette nouvelle disposition, il n'y aurait pas de risque de détérioration du cœur au cours d'une dépressurisation. Enfin, du point de vue de la sûreté, les blocs 44 constituent une protection latérale supplémentaire de la cuve notamment vis-à-vis de l'irradiation.

**Revendications**

1. Réacteur nucléaire à eau pressurisée, du type comprenant une cuve cylindrique (10) à axe vertical obturée par un couvercle (12), une enveloppe cylindrique (16) disposée coaxialement à l'intérieur de la cuve et contenant des assemblages (24a) de section carrée constituant le cœur (24) du réacteur, un collecteur d'entrée (18) de l'eau de refroidissement formé autour de ladite enveloppe (16) et en dessous du cœur (24), un collecteur de sortie (25) de l'eau de refroidissement formé au-dessus du cœur, et des moyens (44) pour maintenir radialement les assemblages, ces moyens étant situés dans l'espace (38) défini entre l'enveloppe cylindrique et ces assemblages, caractérisé en ce que lesdits moyens sont constitués par des blocs métalliques (44) remplissant la totalité dudit espace (38), ces blocs étant munis de trous verticaux (54) alignés sur toute la hauteur du cœur (24) pour définir des canaux de refroidissement continus (55) dans lesquels une faible partie de l'eau de refroidissement circule entre le collecteur d'entrée (18) et le collecteur de sortie (25).

2. Réacteur selon la revendication 1, caractérisé en ce que les blocs (44) sont empilés les uns sur les autres dans le sens vertical pour former des colonnes, les blocs d'une même colonne étant assemblés par des tirants (56) placés dans certains des canaux de refroidissement (55).

3. Réacteur selon l'une quelconque des revendications 1 ou 2, caractérisé en ce que les blocs (44) prennent appui les uns sur les autres dans le sens circonférentiel par des surfaces sensiblement radiales (50) de façon à former une voûte autoportante vis-à-vis des efforts centripètes.

4. Réacteur selon la revendication 3, caractérisé en ce que les blocs (44) sont solidarisés entre eux vis-à-vis des efforts centrifuges ou centripètes par des clavettes verticales (62) pénétrant dans des rainures (64) formées dans lesdites surfaces sensiblement radiales (50).

5. Réacteur selon la revendication 3, caractérisé en ce que les blocs (44) sont solidarisés entre eux vis-à-vis des efforts centrifuges par des encoches complémentaires formées dans lesdites surfaces sensiblement radiales (50).

6. Réacteur selon l'une quelconque des revendications précédentes, caractérisé en ce qu'au moins une partie des trous (54) formés dans les blocs (44) est munie de moyens de contrôle du débit qui les traverse.

7. Réacteur selon la revendication 6, caractérisé en ce que les moyens de contrôle du débit sont situés au niveau de la base du cœur (24) du réacteur.

8. Réacteur selon la revendication 6, caractérisé en ce que les moyens de contrôle du débit sont situés au niveau de la partie supérieure du cœur (24) du réacteur.

9. Réacteur selon l'une quelconque des revendications 6 à 8, caractérisé en ce que le débit de l'eau circulant dans chaque canal (55) est ajusté à l'aide des moyens de contrôle du débit, de façon que la température de chaque bloc (44) soit sensiblement homogène.

10. Réacteur selon l'une quelconque des revendications précédentes, caractérisé en ce que le nombre et la section des canaux (55) sont déterminés de manière à ce que la température de chaque bloc soit sensiblement homogène.

**Claims**

1. A pressurized water nuclear reactor of the type comprising a cylindrical pressure vessel (10) with a vertical axis, covered by a lid (12), a cylindrical sleeve (16) disposed coaxially in the interior of the pressure vessel and containing fuel assemblies (24a) of square section constituting the core (24) of the reactor, and inlet manifold (18) for cooling water formed around said sleeve (16) and below the core (24), an outlet manifold (25) for cooling water formed above the core, and radial spacing means (44) for the assemblies, said means being located in the space (38) defined between the cylindrical sleeve and said assemblies, characterized in that said means comprise metallic blocks (44) filling the whole of said space (38), said blocks being provided with vertical bores (54) aligned over the entire height of the core (24) to define continuous cooling channels (55) in which a minor proportion of the cooling water circulates between the inlet manifold (18) and the outlet manifold (25).

2. A reactor according to Claim 1, characterized in that the blocks (44) are stacked vertically above one another to form columns, the blocks of any one column being assembled by tie rods (56) placed in some of the cooling channels (55).

3. A reactor according to either of Claims 1 and 2, characterized in that the blocks (44) bear upon one another circumferentially by substantially radial surfaces (50) whereby to form a self-supporting arch against centripetal forces.

4. A reactor according to Claim 3, characterized in that the blocks (44) are held together against centrifugal or centripetal forces by vertical keys (62) lying in grooves (64) formed in said substantially radial surfaces (50).

5. A reactor according to Claim 3, characterized in that the blocks (44) are held together against centripetal forces by complimentary notches formed in said substantially radial surfaces (50).

6. A reactor according to any one of the preceding Claims, characterized in that at least a part of the bores (54) formed in the blocks (44) have means for controlling the rate of flow through them.

7. A reactor according to Claim 6, characterized in that the flow control means are situated at the level of the base of the reactor core (24).

8. A reactor according to Claim 6, characterized in that the flow control means are located at the level of the upper part of the reactor core (24).

9. A reactor according to any one of Claims 6 to 8, characterized in that the rate of flow of water circulating in each channel (55) is adjustable by the flow control means, whereby the temperature of each block (44) is substantially homogeneous.

10. A reactor according to any one of the preceding Claims, characterized in that the number and cross-section of the channels (55) are determined so that the temperature of each block is substantially homogeneous.

**Ansprüche**

1. Druckwasserreaktor, bestehend aus einem zylindrischen, aufrecht stehenden Gehäuse (10), das von einem Deckel (12) verschlossen ist, einem zylindrischen Mantel (16), der koaxial im Innern des Gehäuses angeordnet ist und im Querschnitt rechteckige Einbauten (24a) enthält, die den Kern (24) des Reaktors bilden, eine Eintrittswasserkammer (18) für Kühlwasser, die um den Mantel (16) herum und unter dem Kern (24) ausgebildet ist, eine Austrittswasserkammer (25) für Kühlwasser, die über dem Kern (24) ausgebildet ist, und Einrichtungen (44), die die Einbauten radial halten und die in dem Zwischenraum (38) angeordnet sind, der zwischen dem zylindrischen Mantel und den Einbauten ausgebildet ist, dadurch gekennzeichnet, daß diese Einrichtungen von Metallblöcken (44) gebildet sind, die den gesamten Zwischenraum (38) ausfüllen und die mit vertikalen Bohrungen (54) versehen sind, die sich über die gesamte Höhe des Kerns (24) erstrecken, um durchgehende Kühlkanäle (55) auszubilden, in denen eine geringe Kühlwassermenge zwischen der Eintrittswasserkammer (18) und der Austrittswasserkammer (25) zirkuliert.

2. Reaktor nach Anspruch 1 dadurch gekennzeichnet, daß die Blöcke (44) vertikal aufeinandergeschichtet sind und Säulen ausbilden, wobei die Blöcke jeweils einer Säule durch Zugstäbe (56) zusammengehalten sind, die durch einige der Kühlkanäle (55) verlaufen.

3. Reaktor nach einem der Ansprüche 1 oder 2 dadurch gekennzeichnet, daß die Blöcke (44) in Umfangsrichtung an im wesentlichen radial verlaufenden Flächen (50) aneinanderliegen und ein gegenüber nach innen gerichteten Kräften widerstandsfähiges selbsttragendes Gewölbe bilden.

4. Reaktor nach Anspruch 3 dadurch gekennzeichnet, daß die Blöcke (44) miteinander gegenüber zentrifugalen oder zentripetalen Kräften durch vertikal verlaufende Nutkeile (62) verbunden sind, die in Nuten (64) verlaufen, die in den im wesentlichen radialen Flächen (50) ausgebildet sind.

5. Reaktor nach Anspruch 3 dadurch gekennzeichnet, daß die Blöcke (44) miteinander gegenüber zentrifugalen Kräften durch zueinanderpassende Ausschnitte verbunden sind, die in den im wesentlichen radialen Flächen (50) ausgebildet sind.

6. Reaktor nach einem der vorherigen Ansprüche dadurch gekennzeichnet, daß wenigstens ein Teil der Bohrungen (54) in den Blöcken (44) mit Einrichtungen zum Beeinflussen des Durchflusses durch sie versehen sind.

7. Reaktor nach Anspruch 6 dadurch gekennzeichnet, daß die Beeinflussungseinrichtungen in Höhe des unteren Bereichs des Reaktorkerns (24) angeordnet sind.

8. Reaktor nach Anspruch 6 dadurch gekennzeichnet, daß die Beeinflussungseinrichtungen in Höhe des oberen Bereichs des Reaktorkerns (24) angeordnet sind.

9. Reaktor nach einem der Ansprüche 6 bis 8 dadurch gekennzeichnet, daß die Menge des in jedem Kanal (55) zirkulierenden Wassers mit Hilfe der Beeinflussungseinrichtung derart eingestellt wird, daß die Temperatur eines jeden Blocks (44) im wesentlichen homogen ist.

10. Reaktor nach einem der vorherigen Ansprüche dadurch gekennzeichnet, daß die Zahl und der Querschnitt der Kanäle (55) derart gewählt sind, daß die Temperatur eines jeden Blocks im wesentlichen homogen ist.

FIG. 1

FIG. 2